# EUROPEAN PATENT SPECIFICATION

(11) **EP 2 772 772 B1**
(45) Date of publication and mention of the grant of the patent: **11.01.2017**
(21) Application number: 13156961.8
(22) Date of filing: 27.02.2013
(51) Int. Cl.: G01S 5/06, A63B 71/06, A63B 24/00, G01S 13/87

(54) **Apparatus, method and computer program for providing a virtual boundary**
Vorrichtungen, Verfahren und Computerprogramm zur Bereitstellung einer virtuellen Grenze
Appareil, procédé et programme informatique pour fournir une délimitation virtuelle

(43) Date of publication of application: 03.09.2014
(73) Proprietor: Fraunhofer-Gesellschaft zur Förderung der angewandten Forschung e.V., 80686 München (DE)
(72) Inventor: Otto, Stephan, 90562 Heroldsberg (DE); Edelhäußer, Thorsten, 90409 Nürnberg (DE); Witt, Nicolas, 90459 Nürnberg (DE); Völker, Matthias, 91093 Heßdorf (DE); Voll, David, 90552 Röthenbach a. d. Pegnitz (DE); Mutschler, Christopher, 91054 Erlangen (DE)
(74) Representative: 2SPL Patentanwälte PartG mbB

(56) References cited:
- EP-A2- 1 666 916
- FR-A1- 2 753 633
- US-A1- 2005 143 199

## Description

The present disclosure relates to the field of geographical location tracking systems and, more particularly, to Real-time Locating Systems (RTLS) used to automatically identify and track the location of objects or people in real time in a contained area under observation.

Sensor networks, such as, for example, wireless sensor networks, have a wide range of applications. For example, wireless sensor networks of various technologies may be used for locating purposes, such as locating humans and/or other objects. Here, "locating" means the detection or determination of a geographical location or position. Some specialized locating or position tracking systems (RTLS) may be used for locating athletes and other objects (e.g. a ball) in sport events, such as, for example, soccer, American football, rugby, tennis, etc. Examples of such a position tracking system are disclosed in in EP 1 666 916 A2 or US 2005/0143199 A1.

With using gathered geographic location or positioning data of players and/or a ball it is possible to perform measurements and/or to derive statistical information related to the whole sports event, for example a soccer match, or related to individual teams or players. Such derived statistical information may be interesting for various reasons. On the one hand, there are various commercial interests as certain statistics and their analysis may be of particular relevance for spectators in a stadium and/or in front of a television set at home. Hence, providing certain statistics may raise more interest in sport events. On the other hand, statistical data derived from positioning data may as well be used for training purposes. Here, an opponent and/or the behavior of the own team may be analyzed as well as the performance and/or health condition of individual players.

Hence, there is a desire to further improve the flexibility of the provision of measurements and/or statistical information based on locating systems.

According to a first aspect, some examples of the present disclosure provide an apparatus comprising an interface to a geographical location tracking system (or locating system), wherein the interface is configured to receive location information indicative of a geographical location of a tracked object or a position tag attached thereto. Further, the apparatus comprises a processor which is configured to determine, based on a comparison of the location information with predetermined information indicative of a boundary, line or barrier, whether at least a part of the object has crossed or passed the boundary or line.

In other words, some examples provide an apparatus that may act similar to a conventional light-barrier. However, in examples the detection as to whether the tracked object of interest has crossed the (imaginary) line or barrier is not based on detecting the presence or absence of the object in vicinity of the line by using a light transmitter, but is based on comparing geographical location information of the tracked object (or its attached position marker) with or against geographical location information defining the (imaginary) boundary, line or barrier. That is to say, examples may provide a virtual light-barrier based on information provided by a locating system.

In some examples, the apparatus, which may comprise one or more computing devices (processors), may be directly or indirectly coupled to the underlying locating system via its interface, which may be a wired or wireless interface according to different examples and/or depending on the underlying technology of the locating system. Hence, the apparatus may be a part of the locating system or be an external device. An example for a wireless interface would be a radio interface. In case the locating system does not comprise a specific location processor for determining geographic location data corresponding to the tracked object the apparatus' interface may comprise a receiver which is configured to receive the location information in form of wave signals emitted from the tracked object, which may be remote from the apparatus. Thereby the wave signals may be Radio Frequency (RF) signals, optical wave signals or acoustic wave signals.

That is to say, in examples a location of the tracked object and a location processor for determining the corresponding geographic location data, e.g. in form of coordinates, will typically differ from each other. Further, the geographical location of the tracked object may be determined based on an evaluation of one or more wave signals received from the tracked object via fixed reference points or receivers (e.g. RF receivers, optical receivers, acoustic receivers, etc.) placed around an area under observation. Hence, the geographical location tracking system may comprise a plurality of receivers surrounding an area under observation, wherein the one or more receivers are configured to receive a locating signal emitted by the object or the position tag, and wherein the (imaginary) line is positioned within the area under observation surrounded by the plurality of receivers.

In some examples, the locating system may be a terrestrial Real-Time Locating System (RTLS) which may be based on various underlying physical layer technologies. A RTLS may be used to automatically identify and track the location of objects or people in real time, for example within a building or other contained area of interest. Wireless RTLS tags (position markers) may be attached to objects or worn by people, and in most RTLS, fixed reference points, such as various kinds of receivers, receive wireless signals from tags to determine their location. The physical layer of RTLS technology may usually be some form of Radio Frequency (RF) communication, but some systems may also use optical (e.g. infrared, cameras, TOF (time-of-flight) cameras) or acoustic (e.g. ultrasound) technology instead of or in addition to RF.

A wavelength of the used waves or locating signals may be adapted to meet certain resolution accuracy requirements. In some examples, the RTLS is configured to provide a locating accuracy of tracked objects in the range of centimeters, e.g. in the range of up to 20 cm, more preferably up to 10 cm. Hence, the geographical location tracking system may be configured to determine the geographical location of a tracked object or a position tag with an accuracy of better than 20 cm. Position tags (position markers) and fixed reference points can be transmitters, receivers, or both, resulting in numerous possible technology combinations. That is to say, in various examples the location tracking system may be a real-time locating system based on radio frequency communication based tracking, or based on optical, or based on acoustic tracking of a position tag or marker attached to the object of interest in an area under observation, which may be of arbitrary geometry. Hence, in examples the geographical location of the object may be determined based on wave signals emitted or reflected from the object itself or position markers attached thereto. The wave signals may be electromagnetic wave signals or acoustic wave signals in some examples.

In the context of various examples a real-time locating system may be understood as a hardware and/or software system that is subject to a "real-time constraint", e.g. operational deadlines from event to system response. Real-time systems can guarantee responses within strict time constraints. According to examples, real-time response times may be understood to be in the order of milliseconds and, more preferably, even microseconds. Real-time location tracking may be beneficial with respect to the observation of live events (e.g. live sports events).

In some examples the location information may be determined based on the evaluation of wireless radio signals and/or magnetic fields emitted from the one or more tracked objects. For this purpose transmitters and/or receivers, generally also denoted as position tags, sensors or markers, may be placed at the individual objects (e.g. athletes, sports item, vehicles, etc.) to be located by the tracking system. Corresponding reception and/or transmission devices may also be mounted to predetermined locations around a geographical area of interest, i.e. the area under observation, as e.g. a soccer field or a training area. An evaluation of signal strengths, signal propagation times, and/or signal phases, just to name a few possible technical alternatives, may then lead to location data streams indicative of the geographic position of individual tracked objects at different time instants. Typically, a geographic location data sample may be associated with a timestamp indicating at which time an object was located at which geographic position. With this combined information kinematic data, like velocity (speed), acceleration, etc. may as well be provided in addition to the location data comprising, for example, spatial x-, y-, and z-coordinates.

That is to say, in examples where such location information has been determined beforehand, the apparatus' interface may be configured to receive, as the location information, a stream of tuples of spatial coordinates corresponding to the object's location, wherein a tuple of spatial coordinates may have associated thereto a timestamp indicating a measurement time of the tuple of spatial coordinates, and wherein the processor may further be configured to determine, based on the timestamp, when at least the part of the object of interest has crossed the (virtual) boundary or line. As has been explained before, in other examples the apparatus' processor may also be operable to determine said tuples of spatial coordinates based on certain properties of received wireless radio signals, for example. In case the spatial coordinates also comprise data indicative of the object's height or its marker's height, said height may also be taken into account when the object crosses the boundary or line.

In a particular examples of a wireless tracking system people or objects may be equipped with tiny transmitters (i.e. position tags), which may be embedded in footwear, uniforms and balls and whose unique signals are picked up by a number of antennas placed around the area under observation. Receiver units may process the collected signals and determine their Time of Arrival (ToA) values. Based on a calculation of the differences in propagation delay, each transmitter's position may then continuously be determined. In addition, a computer network coupled to or integrated with the wireless tracking system may analyze the position data so as to detect specific events, such as the crossing of the predefined line or boundary. Operating in the 2.4 or 5 GHz band, the tracking system may be kept globally license-free. Hence, in some examples the location tracking system may comprise one or more radio transmitters as position tags attached to the object, one or more antennas placed around an area under observation for receiving radio signals from the one or more radio transmitters, and a location processor configured to determine the location information based on the received radio signals and configured to provide it to the apparatus' interface.

In some examples, the predetermined information indicative of the boundary may be indicative of at least one geographical location and/or a radius defining the boundary as a curved surface within the area under observation. For example, the at least one geographical location may be a center of a virtual spherical boundary surface. In other examples, the predetermined information indicative of the boundary or line may be indicative of at least one geographical location and/or a spatial direction defining the boundary, line or barrier as a straight line within the area of observation. That is to say, the geographical position of the line in the area under observation may be defined by at least one point within the area under observation together with a spatial direction or orientation. Further, the (imaginary) line or barrier could as well be defined by two or more points on said line. For example, the (imaginary) line could be a boundary of a certain geographical two- or three-dimensional area, such as a soccer field in some examples. Hence, in such an example the line could be defined by geographical locations corresponding to two corner points of the soccer field. In such a case the line can be fixed or stationary and the predetermined information indicative of the line could be pre-stored in an electronic location database coupled to the apparatus, for example. Hence, the predetermined information may be fixed information corresponding to a fixed or stationary line.

However, some examples also allow for more flexibility with respect to the position and/or orientation of the (imaginary) boundary or line in that the predetermined information indicative of the line may be variable. For example, the boundary against which the position of the tracked object is to be compared may be movable or changeable as well. For example, in some examples the at least one geographical location defining the (imaginary) line or boundary may correspond to a geographical location of at least one movable boundary- or line-defining object (e.g. a traffic cone) also tracked by the geographical location tracking system. That is to say, one or more position tracking sensors or markers may be attached to one or more traceable objects such that the tracked positions of those markers define the geographical position and/or orientation of the line with the area under observation. In such a way an (imaginary) boundary of interest against which to compare the position of a tracked object may easily be shifted or changed within the area under observation without any cumbersome mechanical (de-) installations. It will be apparent to the skilled person that examples also allow a definition and modification of an arbitrary area and its boundary lines, such that an entering or leaving said area may be detected by example implementations. In other words, the line corresponding to the virtual light-barrier may move, allowing even complex measurement scenarios.

According to some examples, the tracked object may have associated thereto a first and a second position tag, and the processor may be configured to determine whether the object has crossed the boundary based on geographical locations of the first and the second position tag (marker). In addition to the fact that more than one trigger point per object may be provided, such examples also allow the determination of a virtual, i.e. a computed, trigger point based on the tracked locations of the first and the second marker. This virtual trigger point may be an interpolated or extrapolated trigger point, for example. This may be particularly advantageous for tracking large objects, such as commercial vehicles, for example. Here, a flexible and variable point of interest (trigger point) may be defined whose tracked or determined location may be compared against a certain line or barrier corresponding to the virtual light-barrier. For example, it may be decided to move a trigger point from a front of a vehicle to a back of the vehicle.

As examples of the present disclosure may be used in various scenarios, such as logistics, sports, traffic, etc., the tracked object may generally be any movable object, such as a human, an animal, a good, sports equipment, or a vehicle - just to name a few possibilities. In order to identify a tracked object its position markers may allow for a unique identification, for example, by emitting an object-specific code. Thereby also more than one object may be tracked and compared to the (imaginary) boundary or line at the same time.

In accordance with a further aspect example it is also provided a method comprising a step of receiving, from geographical location tracking system, location information indicative of a geographical location of a tracked object or a position tag attached thereto, and a step of determining, based on a comparison of the location information with predetermined information indicative of a boundary, whether at least a part of the object has crossed the boundary.
Some examples may also comprise digital circuitry installed within the apparatus for performing the method. Such a digital control circuit, e.g. a Digital Signal Processor (DSP), an Application Specific Integrated Circuit (ASIC), or a general purpose computer, needs to be programmed accordingly. Hence, yet further embodiments also provide a computer program having a program code for performing embodiments of the above method, when the computer program is executed on a programmable hardware device.

Examples may be used for measuring or determining distances, time, or geographical areas, as it may e.g. be useful for training purposes in sports. For example, embodiments may allow measuring the time it takes to pass a certain distance from a first (predefined) line to a second (predefined) line. This may be useful for velocity determination, for example. Thereby the (boundary) lines may even be defined by movable position markers (e.g. cones), such that a certain measurement setup may easily be changed or modified by simply moving the boundary- or line-defining position markers in the area under observation of the locating system without reinstalling complex and sensitive hardware arrangements.

Further, examples also allow to easily track more than one object (having at least one position marker) at the same time and to compare their respective tracked locations against the location of one or more (imaginary) lines or barriers. If a radio-based geographical location tracking system is used, typical disadvantageous optical shading or covering constraints of conventional light-barriers may be overcome. Each object to be tracked may have associated therewith unique radio identification (ID). Hence, the processor may be configured to determine whether at least one of a plurality of objects has crossed the boundary, based on an evaluation of object-specific identification signals for identifying each of the plurality of objects.

Also, examples allow for defining arbitrary trigger points for triggering a follow-up event after at least a part of the object has crossed the line. Here, almost any relation of a tracked location of the object (or its marker) to the location of the line or barrier is implementable as such a relation may be realized by computation. Equipping an object to be tracked with more than one position marker may further favor the flexibility of trigger points.

As examples also allow for recording any tracked positions, recorded measurement scenarios become reconstructable and even changeable at a later stage.
Visualizing the tracked objects, possibly including the one or more lines or boundaries, allows depicting and verifying a certain measurement setup in the area of observation. Some examples of the present disclosure will be described in the following by way of example only, and with reference to the accompanying figures, in which
- Fig. 1: illustrates an exemplary virtual light-barrier setup according an example of the present disclosure; and
- Fig. 2: schematically illustrates a flow chart of a virtual light-barrier method according to an example.

Various examples will now be described in more detail with reference to the accompanying figures. In the figures, the thicknesses of layers and/or regions may be exaggerated for clarity.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular examples only and is not intended to be limiting of examples. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same or a similar meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

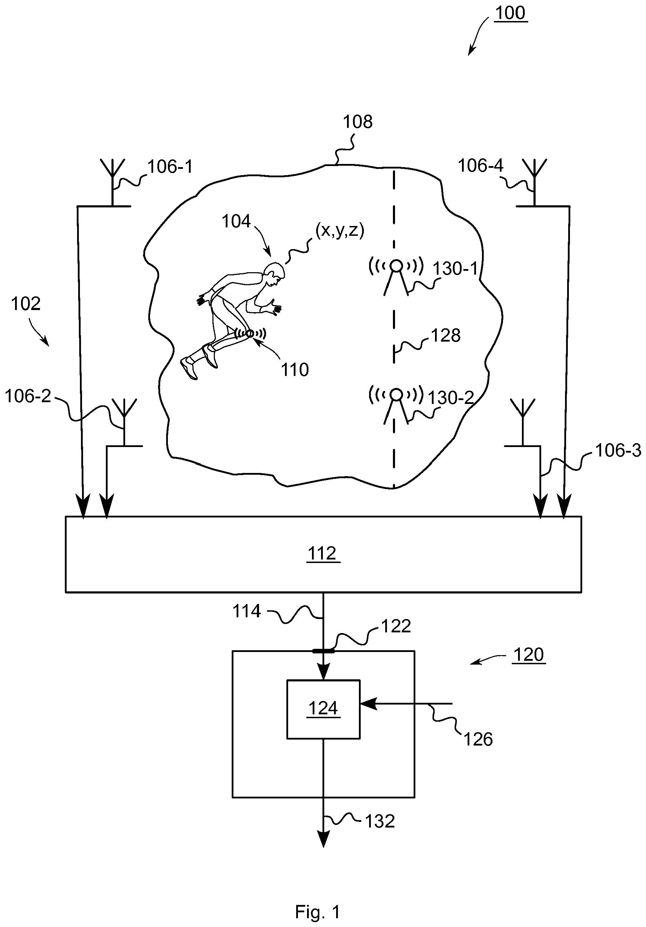

Fig. 1 schematically illustrates an exemplary setup 100 of an example of the present disclosure providing a virtual light-barrier or boundary.

The shown setup 100 comprises a RTLS 102 for determining a geographic location of an object 104 to be tracked, which is an athlete in the sketched example. The RTLS 102 comprises a plurality of location signal receivers 106-1 to 106-4 placed around an area of observation 108 which may be a training court, for example. The receivers 106-1 to 106-4 are configured to receive different versions of a locating signal emitted by a position tag 110 attached to the tracked object 104. In the illustrated example the RTLS 102 is a radio-based RTLS, wherein the receivers 106-1 to 106-4 comprise receive antennas at fixed positions surrounding the area of observation 108, respectively, for picking up a RF location signal transmitted from a transmitter integrated in or coupled to the position marker 110. Further, the exemplary RTLS 102 comprises a location processor device 112 which is coupled to the receivers 106-1 to 106-4 and which is configured to derive geographic location information 114 of object 104 based on the received versions of the location signal. Thereby different received versions of the location signal result from different signal propagation paths to from the object 104 to the receivers 106-1 to 106-4. As has been described above, the geographic location of object 104 may be determined by the processor device 112 based on the differences in propagation delay of the various signal versions, for example. Other terrestrial triangulation and/or multilateration techniques are, however, also conceivable to provide the location information 114. The location processor device 112 may be configured to determine the object's location within the area 108 with an accuracy of less than 20 cm, preferably less than 10 cm, and even more preferably less than 5 cm. Some examples allow position tracking with an accuracy in the sub-centimeter range.

In the exemplary setup 100 the RTLS 102 and an apparatus 120 are coupled to each other via an interface 122. That is to say, the apparatus 120 comprises the interface 122 to the locating system 102, wherein the interface 122 is configured to receive the location information 114 indicative of a geographical location of the tracked position tag or marker 110 attached to the object 104. Thereby the interface 122 may be configured to receive, as the location information 114, a stream of planar or spatial coordinates (e.g. x, y) corresponding to the tracked position tag 110 from the location processor device 112. The apparatus 120 further comprises a processor 124 which is configured to determine, based on a comparison of the location information 114 with predetermined information 126 indicative of a (imaginary) boundary in form of straight line 128 within the area of observation 108, whether at least a part of the object 104 has crossed the line 128. If this is the case one or more events 132 may be triggered. Thereby an event 132 may be understood to be an instantaneous occurrence of interest at a point of time and may be defined by a unique event ID. In general, an event is associated with a change in the distribution of a related quantity that can be sensed. An event instance is an instantaneous occurrence of an event type at a distinct point in time. Such an event depends on the application of examples. In ball game applications, an event may, for example, be "player X enters penalty area" or "ball leaves soccer field boundaries". More complicated events may, for example, be "offside" or "foul".

Note that the apparatus 120 and the processor 112 may also be implemented in a common device according to some examples. That is to say, the functionality of the location processor device 112 may also be incorporated within apparatus 120, and vice versa.

In examples a tuple of spatial coordinates (x, y) may have associated thereto a timestamp indicating a measurement or determination time of said tuple of spatial coordinates. In this case the processor 124, which may be regarded as a virtual light-barrier processor, may further be configured to determine, based on the timestamp, also a time instant when at least the part of the object 104 has crossed the line 128. Optionally, the processor 124 may also determine at which height the object 104 has passed the line 128 if the spatial coordinates also comprise a height component (z).

The predetermined information 126 indicative of the line or virtual light-barrier 128 may be indicative of at least one geographical location and/or a spatial direction/orientation defining the line 128 as a straight line within the area under observation 108 surrounded by the RTLS receivers 106-1 to 106-4. That is to say, the line 128 may be defined by one point and a direction/orientation or by more than one point - typically two points - in the area 108. The predetermined information 126 may be pre-stored information from a database (not shown) or it may be indicative of a presently measured and variable location of the line 128, as will become clear in more detail below.

In the example illustrated in Fig. 1 the predetermined information 126 indicative of the line 128 may not only be based on stored geographical data characterizing the area under observation 108, such as stored and fixed digital map data. Additionally or alternatively the line information 126 may also stem from continuous and/or periodic measurements of the RTLS 102. As indicated in Fig. 1 by reference numerals 130-1 and 130-2, the line or barrier 128 may also be defined by at least two objects, wherein each line-defining object 130-1 and 130-2 may be equipped with a position marker (e.g. a transmitter), respectively. In this way the current position of the line 128 as well as its current orientation may be defined by the two movable tracked objects 130-1, 130-2, which locations may be determined by means of the RTLS 102 and provided to the processor 124 for evaluation. For example, the movable tracked objects 130-1, 130-2 may correspond to objects like traffic cones equipped with active position markers. That is to say, the at least one geographical location defining the line 128 may correspond to a geographical location of one or more movable line-defining objects 130 also tracked by the geographical location tracking system 102. For example, for an offside-detection the line 128 may also be variably defined by a variable x-coordinate of a (last) field player and a constant lineorientation parallel to the goal line.

As the skilled person will recognize there are a variety of applications for examples of the present disclosure. Its principles may be used for logistics, traffic management, or training support for athletes, for example. It will be appreciated that tracked object 104 may not only be humans, as indicated by Fig. 1, but also any kind of vehicles (i.e., cars, trains, planes, etc.), items of sports equipment (e.g. ball, puck, any kind of racket, etc.), or animals. Depending on the application and a scenario of interest also more than one position marker 110 may be attached to or implemented in an object 104 to be tracked. By placing more than one marker at the object to be tracked more complete and differentiated measurements and evaluation become possible. For example, in some scenarios it may be of interest whether a certain part of the object 104 has crossed the line while another part of it has not. This may be achieved by placing individual position markers at the object parts of interest, respectively. Utilizing more than one position tag 110 per tracked object may be of particular interest for large tracked objects, such as trucks, for example.

Of course examples also allow tracking more than one object 104 at the same time. Each object 104 or its corresponding transmitter(s) 110 may be identified by a unique signal ID, for example. Thereby examples allow determining which of the multiple tracked objects has crossed one or more predefined lines 128 or boundaries in form of arbitrary planes/surfaces in the three-dimensional space within the area of observation 108 enclosed by the fixedly installed receivers 106. This allows tracking and automatic surveillance of a whole soccer match with 22 players, for example. Another application could be to measure the 100 meter times of multiple runners, similar to a conventional light barrier. A further application could be a velocity measurement of vehicles for traffic surveillance, for example.

One particular advantage of examples is that lines or boundaries like hyperplanes, 3D objects, etc. 128 may easily be replaced or shifted within the area under observation 128 by using different predetermined information 126 indicative of the line 128. This different information 126 may be obtained by considering different data from a database or different measurement data form the RTLS 102, wherein both lead to different virtual or imaginary lines. No cumbersome mechanical installations have to be performed. Instead, lines or boundaries 128 may be defined by software or by relocating line-defining movable tracked objects 130.

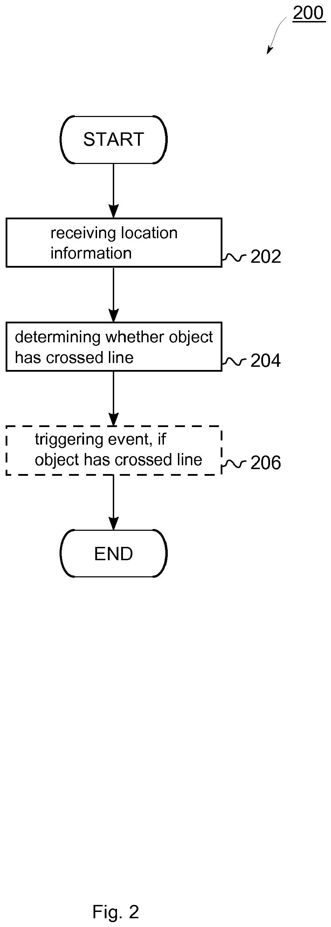

A corresponding method 200, which may be carried out by examples, is schematically illustrated in Fig. 2.

The method 200 comprises a step 202 of receiving, from a geographical location tracking system 102, location information 114 indicative of a geographical location of a tracked object 104 or its attached position tag 110. In a further step 204 it is determined, based on a comparison of the location information 114 with predetermined information 126 indicative of a line 128, whether at least a part of the object 104 has crossed or passed the line 128. If the comparison of step 204 yields that at least a part of the object 104 has crossed the line 128 one or more corresponding events 132 may be triggered in an optional step 206. Examples of the method 200 may be carried out by examples of the apparatus 120 coupled to examples of RTLS 102. Depending on the considered example of the apparatus 120 individual steps of the method 200 may comprise features corresponding to the respective example of apparatus 120.

Functional blocks denoted as "means for ..." (performing a certain function) shall be understood as functional blocks comprising circuitry that is adapted, configured or operable for performing a certain function, respectively. Hence, a "means for s.th." may as well be understood as a "means being adapted configured or operable to do s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons.

Furthermore, in some examples a single step may include or may be broken into multiple sub-steps. Such sub-steps may be included and part of the disclosure of this single step unless explicitly excluded.

## Claims

1. System (100), comprising:
a geographical real-time location tracking system (102) comprising a plurality of receivers (106) surrounding an area under observation (108), wherein the plurality of receivers (106) is configured to receive locating signals continuously emitted by position tags (110);
a first and a second tracked movable boundary-defining inanimate object (130-1; 130-2) positioned within the area under observation (108) and comprising a respective position tag attached thereto, wherein respective current geographical locations of the first and the second movable boundary-defining inanimate object (130-1; 130-2) define a movable boundary (128);
an interface (122) to the geographical real-time location tracking system (102), wherein the interface (122) is configured to receive location information (114) indicative of a geographical location of a tracked object (104) comprising a position tag (110) attached thereto and of the geographical locations of the first and the second movable boundary-defining inanimate object (130-1; 130-2); and
a processor (124) configured to determine, based on a comparison of the location information (114) of the tracked object (104) with current location information (126) of the first and the second movable boundary-defining inanimate object (130-1; 130-2) indicative of the movable boundary (128), whether at least a part of the object (104) has crossed the boundary (128).

2. The system (100) according to claim 1, wherein the interface (122) is configured to receive, as the location information (114), a stream of tuples of spatial coordinates corresponding to the tracked object (104) or its position tag (110) and the first and second boundary-defining inanimate object (130-1; 130-2) or its respective position tag, wherein a tuple of spatial coordinates has associated thereto a timestamp indicating a measurement time of the tuple of spatial coordinates, and wherein the processor (124) is further configured to determine, based on the timestamp, when at least the part of the object (104) has crossed the boundary (128).

3. The system (100) according to one of the preceding claims, wherein the real-time location tracking system (102) is based on radio frequency based tracking and/or based on optical and/or acoustic tracking of the object (104) or its position tag (110) and the first and second boundary-defining inanimate object (130-1; 130-2) or its position tag in an area under observation (108).

4. The system (100) according to one of the preceding claims, wherein the real-time location tracking system (102) comprises:
one or more radio transmitters (110) attached to the object (104) and the first and second movable boundary-defining inanimate object (130-1; 130-2) as tracked position tags (110);
one or more antennas (106) placed around an area under observation (108) for receiving radio signals from the one or more radio transmitters (110); and
a location processor (112) configured to determine the location information (114) based on the received radio signals.

5. The system (100) according to one of the preceding claims, wherein the location information (126) indicative of the boundary is variable information.

6. The system (100) according to one of the preceding claims, wherein the location information (126) indicative of the boundary (128) is indicative of at least one geographical location and/or a radius defining the boundary (128) as a curved surface within the area under observation (108).

7. The system (100) according to one of claims 1 to 5, wherein the location information (126) indicative of the boundary (128) is indicative of at least one geographical location and/or a spatial direction defining the boundary (128) as a straight line within the area under observation (108).

8. The system (100) according to one of the preceding claims, wherein the object (104) has associated thereto a first and a second position tag (110), and wherein the processor (124) is configured to determine whether the object (104) has crossed the
boundary (128) based on geographical locations of the first and/or the second position tag (110).

9. The system (100) according to one of the preceding claims, wherein the processor (124) is configured to determine whether at least one of a plurality of objects (104) has crossed the boundary (128), based on an evaluation of object-specific identification signals for identifying each of the plurality of objects.

10. Method (200), comprising:
continuously receiving (202), from a geographical real-time location tracking system (102) comprising a plurality of receivers (106) surrounding an area under observation (108), location information (114) indicative of a geographical location of a tracked object (104) comprising a position tag (110) attached thereto and location information indicative of respective geographical locations of a first and a second tracked movable boundary-defining inanimate object (130-1; 130-2) comprising a respective position tag attached thereto, wherein current geographical locations of the first and the second movable boundary-defining object (130-1; 130-2) define a movable boundary (128); and
determining (204), based on a comparison of the location information (114) of the tracked object (104) with current location information (126) of the first and the second boundary-defining object (130-1; 130-2) indicative of the movable boundary (128), whether at least a part of the object (104) has crossed the boundary (128).

11. The method (200) according to claim 10, wherein the tracked object (104) is an athlete, an item of sports equipment or a vehicle.

12. A computer program having a program code for performing the method (200) according to claim 10 or 11, when the computer program is executed on a computer or processor.

## Patentansprüche

1. Ein System (100), umfassend:
ein geographisches Echtzeit-Lokalisierungssystem (102), umfassend eine Mehrzahl von einen unter Beobachtung befindlichen Bereich (108) umgebenden Empfängern (106), wobei die Mehrzahl von Empfängern (106) ausgebildet ist zum Empfangen von durch Positionsmarkern (110) kontinuierlich emittierten Lokalisierungssignalen;
ein erstes und ein zweites lokalisiertes, bewegliches, begrenzungsdefinierendes, lebloses Objekt (130-1; 130-2), die innerhalb des unter Beobachtung befindlichen Bereichs (108) positioniert sind und einen jeweiligen, daran angebrachten Positionsmarker umfassen, wobei jeweilige aktuelle geographische Standorte des ersten und des zweiten beweglichen, begrenzungsdefinierenden, leblosen Objekts (130-1; 130-2) eine bewegliche Begrenzung (128) definieren;
eine Schnittstelle (122) zu dem geographischen Echtzeit-Lokalisierungssystem (102), wobei die Schnittstelle (122) ausgebildet ist zum Empfangen einer Lokalisierungsinformation (114), die einen geographischen Standort eines lokalisierten Objekts (104), umfassend einen daran angebrachten Positionsmarker (110), und die geographischen Standorte des ersten und des zweiten beweglichen, begrenzungsdefinierenden, leblosen Objekts (130-1; 130-2) anzeigt; und
einen Prozessor (124), der ausgebildet ist zum Bestimmen, basierend auf einem Vergleich der Lokalisierungsinformation (114) des lokalisierten Objekts (104) mit einer aktuellen Lokalisierungsinformation (126) des ersten und des zweiten beweglichen, begrenzungsdefinierenden, leblosen Objekts (130-1; 130-2), die die bewegliche Begrenzung (128) anzeigt, ob zumindest ein Teil des Objekts (104) die Begrenzung (128) überquert hat.

2. Das System (100) gemäß Anspruch 1, wobei die Schnittstelle (122) ausgebildet ist zum Empfangen, als die Lokalisierungsinformation (114), eines Stroms von Raumkoordinaten-Tupeln, die dem lokalisierten Objekt (104) oder seinem Positionsmarker (110) und dem ersten und zweiten begrenzungsdefinierenden, leblosen Objekt (130-1; 130-2) oder seinem jeweiligen Positionsmarker entsprechen, wobei einem Raumkoordinaten-Tupel ein Zeitstempel zugeordnet ist, der eine Messzeit des Raumkoordinaten-Tupels anzeigt, und wobei der Prozessor (124) ferner ausgebildet ist zum Bestimmen, basierend auf dem Zeitstempel, wann zumindest der Teil des Objekts (104) die Begrenzung (128) überquert hat.

3. Das System (100) gemäß einem der vorangehenden Ansprüche, wobei das Echtzeit-Lokalisierungssystem (102) auf Radiofrequenz-basiertem Tracking basiert und/oder auf optischem und/oder akustischem Tracking des Objekts (104) oder seines Positionsmarkers (110) und des ersten und zweiten begrenzungsdefinierenden, leblosen Objekts (130-1; 130-2) oder derer Positionsmarker in einem unter Beobachtung befindlichen Bereich (108) basiert.

4. Das System (100) gemäß einem der vorangehenden Ansprüche, wobei das Echtzeit-Lokalisierungssystem (102) umfasst:
einen oder mehrere Funksender (110), die an dem Objekt (104) und dem ersten und zweiten beweglichen, begrenzungsdefinierenden, leblosen Objekt (130-1; 130-2) als lokalisierte Positionsmarker (110) angebracht sind;
eine oder mehrere Antennen (106), die um einen unter Beobachtung befindlichen Bereich (108) zum Empfangen von Funksignalen von dem einen oder den mehreren Funksendern (110) platziert sind; und
einen Lokalisierungsprozessor (112), der ausgebildet ist zum Bestimmen der Lokalisierungsinformation (114) basierend auf den empfangenen Funksignalen.

5. Das System (100) gemäß einem der vorangehenden Ansprüche, wobei die Lokalisierungsinformation (126), die die Begrenzung anzeigt, eine variable Information ist.

6. Das System (100) gemäß einem der vorangehenden Ansprüche, wobei die Lokalisierungsinformation (126), die die Begrenzung (128) anzeigt, zumindest einen geographischen Standort und/oder einen Radius, der die Begrenzung (128) als eine gekrümmte Oberfläche definiert, innerhalb des unter Beobachtung befindlichen Bereichs (108) anzeigt.

7. Das System (100) gemäß einem der Ansprüche 1 bis 5, wobei die Lokalisierungsinformation (126), die die Begrenzung (128) anzeigt, zumindest einen geographischen Standort und/oder eine Raumrichtung, die die Begrenzung (128) als eine gerade Linie definiert, innerhalb des unter Beobachtung befindlichen Bereichs (108) anzeigt.

8. Das System (100) gemäß einem der vorangehenden Ansprüche, wobei dem Objekt (104) ein erster und ein zweiter Positionsmarker (110) zugeordnet sind, und wobei der Prozessor (124) ausgebildet ist zum Bestimmen, ob das Objekt (104) die Begrenzung (128) überquert hat, basierend auf geographischen Standorten des ersten und/oder des zweiten Positionsmarkers (110).

9. Das System (100) gemäß einem der vorangehenden Ansprüche, wobei der Prozessor (124) ausgebildet ist zum Bestimmen, ob zumindest eines aus einer Mehrzahl von Objekten (104) die Begrenzung (128) überquert hat, basierend auf einer Beurteilung von objektspezifischen Identifizierungssignalen zum Identifizieren eines jeden aus der Mehrzahl von Objekten.

10. Ein Verfahren (200), umfassend:
kontinuierliches Empfangen (202), von einem geographischen Echtzeit-Lokalisierungssystem (102), umfassend eine Mehrzahl von einen unter Beobachtung befindlichen Bereich (108) umgebenden Empfängern (106), einer Lokalisierungsinformation (114), die einen geographischen Standort eines lokalisierten Objekts (104), umfassend einen daran angebrachten Positionsmarker (110), anzeigt, und einer Lokalisierungsinformation, die jeweilige geographische Standorte eines ersten und eines zweiten lokalisierten, beweglichen, begrenzungsdefinierenden, leblosen Objekts (130-1; 130-2), umfassend einen jeweiligen, daran angebrachten Positionsmarker, anzeigt, wobei aktuelle geographische Standorte des ersten und des zweiten beweglichen, begrenzungsdefinierenden Objekts (130-1; 130-2) eine bewegliche Begrenzung (128) definieren; und
Bestimmen (204), basierend auf einem Vergleich der Lokalisierungsinformation (114) des lokalisierten Objekts (104) mit einer aktuellen Lokalisierungsinformation (126) des ersten und des zweiten begrenzungsdefinierenden Objekts (130-1; 130-2), die die bewegliche Begrenzung (128) anzeigt, ob zumindest ein Teil des Objekts (104) die Begrenzung (128) überquert hat.

11. Das Verfahren (200) gemäß Anspruch 10, wobei das lokalisierte Objekt (104) ein Athlet, ein Sportausrüstungsgegenstand oder ein Fahrzeug ist.

12. Ein Computerprogramm mit einem Programmcode zum Durchführen des Verfahrens (200) gemäß Anspruch 10 oder 11, wenn das Computerprogramm auf einem Computer oder Prozessor ausgeführt wird.

## Revendications

1. Système (100), comprenant:
un système de localisation temps réel géographique (102) comprenant une pluralité de récepteurs (106) entourant une zone sous surveillance (108), dans lequel la pluralité de récepteurs (106) est configurée pour recevoir des signaux de localisation émis en continu par des marqueurs de position (110);
un premier et un second objet inanimé, définissant une délimitation, mobile, localisé (130-1 ; 130-2) positionné dans la zone sous surveillance (108) et comprenant un marqueur de position respectif qui y est attaché, dans lequel des emplacements géographiques actuels respectifs du premier et du second objet inanimé, définissant une délimitation, mobile (130-1 ; 130-2) définissent une délimitation mobile (128) ;
une interface (122) vers le système de localisation temps réel géographique (102), dans lequel l'interface (122) est configurée pour recevoir une information de localisation (114) indiquant un emplacement géographique d'un objet localisé (104) comprenant un marqueur de position (110) qui y est attaché et les emplacements géographiques du premier et du second objet inanimé, définissant la délimitation, mobile (130-1 ; 130-2) ; et
un processeur (124) configuré pour déterminer, sur la base d'une comparaison de l'information de localisation (114) de l'objet localisé (104) avec une information de localisation actuelle (126) du premier et du second objet inanimé, définissant une délimitation, mobile (130-1 ; 130-2) qui indique la délimitation mobile (128), si au moins une partie de l'objet (104) a traversé la délimitation (128).

2. Système (100) selon la revendication 1, dans lequel l'interface (122) est configurée pour recevoir, comme l'information de localisation (114), un flux de tuples de coordonnées spatiales correspondant à l'objet localisé (104) ou à son marqueur de position (110) et au premier et au second objet inanimé, définissant une délimitation (130-1 ; 130-2) ou à son marqueur de position respectif, dans lequel à un tuple de coordonnées spatiales est associée une estampille temporelle indiquant un temps de mesure du tuple de coordonnées spatiales, et dans lequel le processeur (124) est configuré en outre pour déterminer, sur la base de l'estampille temporelle, le moment où d'au moins la partie de l'objet (104) a traversé la délimitation (128).

3. Système (100) selon l'une des revendications précédentes, dans lequel le système de localisation temps réel (102) est basé sur un suivi sur la base des fréquences radio et/ou est basé sur un suivi optique et/ou acoustique de l'objet (104) ou de son marqueur de position (110) et du premier et du second objet inanimé, définissant une délimitation (130-1 ; 130-2) ou de son marqueur de position dans une zone sous surveillance (108).

4. Système (100) selon l'une des revendications précédentes, dans lequel le système de localisation temps réel (102) comprend :
un ou plusieurs émetteurs radio (110) attachés à l'objet (104) et au premier et au second objet inanimé, définissant une délimitation, mobile (130-1 ; 130-2) comme marqueurs de position localisés (110) ;
une ou plusieurs antennes (106) placées autour d'une zone sous surveillance (108) destinée à recevoir de signaux radio provenant d'un ou de plusieurs émetteurs radio (110) ; et
un processeur de localisation (112) configuré pour déterminer l'information de localisation (114) sur la base des signaux radio reçus.

5. Système (100) selon l'une des revendications précédentes, dans lequel l'information de localisation (126) indiquant la délimitation est une information variable.

6. Système (100) selon l'une des revendications précédentes, dans lequel l'information de localisation (126) indiquant la délimitation (128) indique d'au moins un emplacement géographique et/ou un rayon, qui définit la délimitation (128) comme une surface courbée, dans la zone sous surveillance (108).

7. Système (100) selon l'une des revendications 1 à 5, dans lequel l'information de localisation (126) indiquant la délimitation (128) indique d'au moins un emplacement géographique et/ou une direction spatiale, qui définit la délimitation (128) comme une ligne droite, dans la zone sous surveillance (108).

8. Système (100) selon l'une des revendications précédentes, dans lequel à l'objet (104) sont associés un premier et un second marqueur de position (110), et dans lequel le processeur (124) est configuré pour déterminer si l'objet (104) a traversé la délimitation (128), sur la base d'emplacements géographiques du premier et/ou du second marqueur de position (110).

9. Système (100) selon l'une des revendications précédentes, dans lequel le processeur (124) est configuré pour déterminer si au moins un d'une pluralité d'objets (104) a traversé la délimitation (128), sur la base d'une évaluation des signaux d'identification spécifiques aux objets pour identifier chacun de la pluralité d'objets.

10. Procédé (200), comprenant :
Recevoir en continu (202), d'un système de localisation temps réel géographique (102) comprenant une pluralité de récepteurs (106) entourant une zone sous surveillance (108), une information de localisation (114) indiquant un emplacement géographique d'un objet localisé (104) comprenant un marqueur de position (110) qui y est attaché et une information de localisation indiquant des emplacements géographiques respectifs d'un premier et d'un second objet inanimé, définissant une délimitation, mobile, localisé (130-1 ; 130-2) comprenant un marqueur de position respectif qui y est attaché, dans lequel les emplacements géographiques actuels du premier et du second objet définissant une délimitation, mobile (130-1 ; 130-2) définissent une délimitation mobile (128) ; et
Déterminer (204), sur la base d'une comparaison de l'information de localisation (114) de l'objet localisé (104) avec une information de localisation actuelle (126) du premier et du second objet définissant une délimitation (130-1 ; 130-2) qui indique la délimitation mobile (128), si au moins une partie de l'objet (104) a traversé la délimitation (128).

11. Procédé (200) selon la revendication 10, dans lequel l'objet localisé (104) est un athlète, un élément d'équipement de sport ou un véhicule.

12. Programme d'ordinateur avec un code de programme pour la mise en oeuvre du procédé (200) selon la revendication 10 ou 11 lorsque le programme d'ordinateur est exécuté sur un ordinateur ou processeur.
